# EUROPEAN PATENT APPLICATION

(11) **EP 4 407 796 A1**
(43) Date of publication of application: **31.07.2024**
(21) Application number: 22882401.7
(22) Date of filing: 08.08.2022
(51) Int. Cl.: H01Q 1/42, H01Q 1/00

(54) **VORTEX GENERATOR, RADOME, AND ANTENNA**

(30) Priority: 19.10.2021 CN 202111215434
(71) Applicant: Huawei Technologies Co., Ltd., Shenzhen, Guangdong 518129 (CN)
(72) Inventor: YANG, Tianyong, Shenzhen, Guangdong 518129 (CN); ZHANG, Wei, Shenzhen, Guangdong 518129 (CN); ZHANG, Ge, Shenzhen, Guangdong 518129 (CN); WANG, Hongyang, Shenzhen, Guangdong 518129 (CN)
(74) Representative: Pfenning, Meinig & Partner mbB
(86) International application number: PCT/CN2022/110891
(87) International publication number: WO 2023/065779

(57) **Abstract**

This application discloses a vortex generator, a radome, and an antenna, and pertains to the field of wind resistance reduction technologies. The vortex generator includes a first vortex generation part and a second vortex generation part. The first vortex generation part includes a first wing tip, where the first wing tip is located at a first end of the first vortex generation part. The second vortex generation part includes a second wing tip, where the second wing tip is located at a first end of the second vortex generation part. A second end of the first vortex generation part is connected to a second end of the second vortex generation part. The vortex generator is used in the radome, to reduce resistance of an air flow to the radome and reduce a safety risk of wind resistance to the antenna. In addition, the vortex generator can reduce resistance of air flows blown to the radome from various directions, further enhancing resistance reduction effect.

## Description

The present disclosure claims priority to Chinese Patent Application No. 202111215434.X, filed on October 19, 2021 and entitled "VORTEX GENERATOR, RADOME, AND ANTENNA", which is incorporated herein by reference in its entirety.

### TECHNICAL FIELD

This application relates to the field of wind resistance reduction technologies, and in particular, to a vortex generator, a radome, and an antenna.

### BACKGROUND

Antennas in communication technologies, such as base station antennas, are usually installed on a top of a communication tower to receive and transmit electromagnetic waves.

However, the communication tower is high. The antennas are tens of meters high above ground, and there is no obstacle around. Therefore, the antennas are subj ect to large wind resistance, and the large wind resistance causes a safety risk to the antennas.

### SUMMARY

This application provides a vortex generator, a radome, and an antenna, to resolve a problem in a related technology. The technical solutions are as follows.

According to an aspect, a vortex generator is provided. The vortex generator includes a first vortex generation part and a second vortex generation part.

The first vortex generation part includes a first wing tip, where the first wing tip is located at a first end of the first vortex generation part.

The second vortex generation part includes a second wing tip, where the second wing tip is located at a first end of the second vortex generation part.

A second end of the first vortex generation part is connected to a second end of the second vortex generation part.

The first wing tip and the second wing tip are both sharp parts of the vortex generator. An air flow may generate a wing tip vortex at each of the first wing tip and the second wing tip.

In the solution shown in this application, a plurality of vortex generators are vertically installed on an object face. An air flow entering from the first wing tip may generate a wing tip vortex at the first wing tip. This delays separation between the air flow and the vortex generator, achieving resistance reduction effect. An air flow entering from the second wing tip may generate a wing tip vortex at the second wing tip. This delays separation between the air flow and an object face on which the vortex generator is located, achieving resistance reduction effect.

It can be learned that, the vortex generator can reduce the resistance of both the air flow entering from the first wing tip and the air flow entering from the second wing tip. Therefore, the vortex generator can reduce the resistance of the air flow in a larger direction range. Compared with a related technology in which a vortex generator can reduce resistance of an air flow entering only from a first direction or a second direction, the vortex generator in this application can further enhance the resistance reduction effect.

In a possible implementation, a height H of the first vortex generation part gradually increases from the first end to the second end, and a thickness D of the first vortex generation part gradually decreases from a bottom to a top.

A height H of the second vortex generation part gradually increases from the first end to the second end, and a thickness D of the second vortex generation part gradually decreases from a bottom to a top.

In the solution shown in this application, because the height of the first vortex generation part gradually increases from the first end to the second end in a length direction, and the thickness of the first vortex generation part gradually decreases from the bottom to the top in a height direction. The first end of the first vortex generation part is relatively sharp, forming the first wing tip.

In addition, because the height of the first vortex generation part gradually increases from the first end to the second end, and the thickness of the first vortex generation part gradually decreases from the bottom to the top. The first vortex generation part presents a streamlined change.

Similarly, because the height of the second vortex generation part gradually increases from the first end to the second end in a length direction, and the thickness of the second vortex generation part gradually decreases from the bottom to the top in a height direction. The first end of the second vortex generation part is also relatively sharp, forming the second wing tip.

In addition, because the height of the second vortex generation part gradually increases from the first end to the second end, and the thickness of the second vortex generation part gradually decreases from the bottom to the top. The second vortex generation part presents a streamlined change.

Both the first vortex generation part and the second vortex generation part are of streamlined structures, and can further reduce wind resistance.

In a possible implementation, the first vortex generation part and the second vortex generation part are symmetric with respect to a connection face.

In a possible implementation, the first vortex generation part and the second vortex generation part are both in a pyramid shape.

A tip of the first vortex generation part is the first wing tip, and a tip of the second vortex generation part is the second wing tip.

In the solution shown in this application, because a tip of a pyramid is relatively sharp, the first vortex generation part and the second vortex generation part of the vortex generator are both in a pyramid shape.

In this case, the tip of the first vortex generation part is the first wing tip, and the tip of the second vortex generation part is the second wing tip. A base of the first vortex generation part is connected to a base of the second vortex generation part.

This streamlined pyramid has a tip, and is simple in structure and easy to process.

In a possible implementation, the first vortex generation part and the second vortex generation part are both in a triangular pyramid shape or in a semi-cone shape.

The triangular pyramid is a pyramid with a triangle base, and the semi-cone is a cone with a semi-circular base.

In a possible implementation, there is a third wing tip at a connection between the first vortex generation part and the second vortex generation part.

In the solution shown in this application, the plurality of vortex generators are vertically installed on an object face. An air flow entering from the first wing tip may separately generate a wing tip vortex at each of the first wing tip and the third wing tip. This delays separation between the air flow and the vortex generator, achieving resistance reduction effect. An air flow entering from the second wing tip may separately generate a wing tip vortex at each of the second wing tip and the third wing tip. This delays separation between the air flow and an object face on which the vortex generator is located, achieving resistance reduction effect.

In a possible implementation, an end face of the second end of the first vortex generation part and an end face of the second end of the second vortex generation part are both in an oval shape.

The bottom of the first vortex generation part and the bottom of the second vortex generation part form an oval outline.

A side part of the first vortex generation part and a side part of the second vortex generation part are both in an arc shape.

In the solution shown in this application, a bottom of the vortex generator is in an oval shape, a top edge of the vortex generator is in an arc shape, to form a blade edge. A front surface and a rear surface of the vortex generator are both arc surfaces.

In this case, the top edge of the vortex generator is in a streamlined arc shape, so that wind resistance can be reduced, and the first wing tip and the second wing tip are respectively formed at two ends of the vortex generator.

In a possible implementation, the first vortex generation part further includes at least one fourth wing tip. The fourth wing tip is located between the first end and the second end of the first vortex generation part, and is located on a top of the first vortex generation part. The top of the first vortex generation part is a position away from an object face on which the vortex generator is located.

In the solution shown in this application, the at least one fourth wing tip of the first vortex generation part increases a quantity of wing tips. This can form a relatively large quantity of wing tips, further enhance a turbulence degree of the air flow, and further enhance wind resistance reduction effect.

In a possible implementation, a tip of the fourth wing tip faces the second end of the first vortex generation part.

In the solution shown in this application, a tip direction of the fourth wing tip is consistent with a flow direction of the coming air flow, achieving wind resistance reduction effect.

In a possible implementation, the second vortex generation part further includes at least one fifth wing tip. The fifth wing tip is located between the first end and the second end of the second vortex generation part, and is located on a top of the second vortex generation part. The top of the second vortex generation part is a position away from the object face on which the vortex generator is located.

In the solution shown in this application, the at least one fifth wing tip of the second vortex generation part increases a quantity of wing tips. This can form a relatively large quantity of wing tips, further enhance a turbulence degree of the air flow, and further enhance wind resistance reduction effect.

In a possible implementation, a tip of the fifth wing tip faces the second end of the second vortex generation part.

In the solution shown in this application, a tip direction of the fifth wing tip is consistent with a flow direction of the coming air flow, achieving wind resistance reduction effect.

In a possible implementation, a ratio of a length L to a maximum thickness D of the vortex generator is 3: 1.

The length L of the vortex generator is a distance between the first wing tip and the second wing tip, and the maximum thickness D of the vortex generator is a bottom thickness of the vortex generator at the third wing tip.

In the solution shown in this application, the ratio of the length L to the maximum thickness D of the vortex generator is 3: 1, so that an aspect ratio of the vortex generator is relatively large, and the aspect ratio is relatively large, achieving wind resistance reduction effect.

In a possible implementation, the length L of the vortex generator is between 5 millimeters and 40 millimeters.

In a possible implementation, a height H of the vortex generator is equal to the maximum thickness D of the vortex generator.

The height H of the vortex generator is a height of the vortex generator at the third wing tip.

The maximum thickness D of the vortex generator is a bottom thickness of the vortex generator at the third wing tip.

In the solution shown in this application, if the vortex generator is excessively high, resistance generated by the vortex generator is relatively large. However, if the vortex generator is excessively low, it is difficult to form the third wing tip. The height of the vortex generator may be determined based on resistance reduction effect of the vortex generator. For example, the height of the vortex generator may be equal to the maximum thickness of the vortex generator.

In a possible implementation, the height H of the vortex generator is between 5 millimeters and 15 millimeters.

In another aspect, a radome is provided. The radome includes a radome body and the foregoing vortex generator, and there are a plurality of vortex generators.

The plurality of vortex generators are located in a target area of the radome body. The target area is an area in which an air flow does not leave the radome body and is close to a critical area. The critical area is a boundary area between a windward area and a leeward area of the radome body.

In the solution shown in this application, the radome includes the foregoing vortex generator. There is a first wing tip and a second wing tip respectively in a length direction at two ends of the vortex generator. In this case, an air flow entering the vortex generator from the first wing tip generates a wing tip vortex at the first wing tip. An air flow entering the vortex generator from the second wing tip generates a wing tip vortex at the second wing tip. The wing tip vortex can delay separation between the air flow and the radome. Once the separation is delayed, the resistance of the air flow to the radome can be reduced.

Therefore, the vortex generator is used in the radome to reduce resistance of an air flow to the radome. Once the resistance of the air flow to the radome is reduced, a safety risk of wind resistance to an antenna can be reduced.

In addition, the air flow entering the vortex generator from the first wing tip may generate the wing tip vortex at the first wing tip, and the air flow entering the vortex generator from the second wing tip may generate the wing tip vortex at the second wing tip. Therefore, regardless of a direction from which the air flow blows towards the radome, once the air flow enters the vortex generator, the vortex generator can reduce wind resistance. Therefore, the vortex generator can reduce resistance of air flows blown to the radome from various directions, further enhancing resistance reduction effect.

In a possible implementation, the plurality of vortex generators are arranged in a row in the target area of the radome body.

In the solution shown in this application, one row of vortex generators may be distributed in the target area that is of the radome body of the radome and that is close to a side part. Certainly, a plurality of rows of vortex generators may be distributed in the target area that is of the radome body of the radome and that is close to the side part.

In the solution in which the plurality of rows of vortex generators are distributed in the target area that is of the radome body of the radome and that is close to the side part, two adjacent rows of vortex generators may be staggered. For example, each vortex generator in one row of vortex generators may correspond to a spacing between two vortex generators in an adjacent row of vortex generators.

In the solution in which the plurality of rows of vortex generators are distributed in the target area that is of the radome body and that is close to the side part, a total width of the plurality of rows of vortex generators may be between 5 millimeters and 45 millimeters. The total width may be a product of a quantity of rows and a shortest distance between the first wing tip and the second wing tip of the vortex generator, plus a product of a quantity of row spacings and a row spacing.

In a possible implementation, an included angle a between two adjacent vortex generators in each row of the vortex generators is between 0 degrees and 60 degrees.

The included angle α between the two adjacent vortex generators 1 may be an included angle between a connection line between a first wing tip and a second wing tip of one vortex generator and a connection line between a first wing tip and a second wing tip of another adjacent vortex generator.

In the solution shown in this application, for example, the included angle between the two adjacent vortex generators may be 45 degrees. For another example, the included angle between the two adjacent vortex generators may alternatively be 0 degrees.

In a possible implementation, a center distance d between the two adjacent vortex generators in each row of the vortex generators is between 10 millimeters and 75 millimeters.

In the solution shown in this application, a spacing between two vortex generators in one row of vortex generators may be determined based on an empirical value and a simulation experiment. For example, the center distance d between the two adjacent vortex generators in each row of the vortex generators is between 10 millimeters and 75 millimeters.

In another aspect, a radome is provided. The radome includes a radome body, and roughness of an outer surface of the radome body in a target area is greater than a target value.

The target area is an area in which an air flow does not leave the radome body and is close to a critical area. The critical area is a boundary area between a windward area and a leeward area of the radome body.

The target value may be determined based on an empirical value and a simulation experiment, or may be determined based on wind resistance reduction effect.

In the solution shown in this application, the radome delays separation between an air flow and the radome body of the radome by increasing the roughness in the target area, to reduce resistance of the air flow to the radome.

In a possible implementation, the target area of the radome body has one of a fish scale structure, a concave array structure, and a convex array structure.

In another aspect, an antenna is provided. The antenna includes the foregoing radome. The antenna may be specifically a base station antenna, and is installed on a top of a communication tower.

In the solution shown in this application, the radome of the antenna includes a vortex generator as described above. There is a first wing tip and a second wing tip respectively in a length direction at two ends of the vortex generator. There is a third wing tip between the first wing tip and the second wing tip of the vortex generator. In this case, an air flow entering the vortex generator from the first wing tip generates a wing tip vortex at the first wing tip. An air flow entering the vortex generator from the second wing tip generates a wing tip vortex at the second wing tip. The wing tip vortex can delay separation between the air flow and the radome. Once the separation is delayed, the resistance of the air flow to the radome can be reduced.

Therefore, the vortex generator is used in the radome to reduce resistance of an air flow to the radome. Once the resistance of the air flow to the radome is reduced, a safety risk of wind resistance to an antenna can be reduced.

In addition, the air flow entering the vortex generator from the first wing tip may generate the wing tip vortex at the first wing tip, and the air flow entering the vortex generator from the second wing tip may generate the wing tip vortex at the second wing tip. Therefore, regardless of a direction from which the air flow blows towards the radome, once the air flow enters the vortex generator, the vortex generator can reduce wind resistance. Therefore, the vortex generator can reduce resistance of air flows blown to the radome from various directions, further enhancing resistance reduction effect.

### BRIEF DESCRIPTION OF DRAWINGS

FIG. 1 is a schematic diagram of a structure of a vortex generator according to this application;
FIG. 2 is a schematic diagram of a vortex generator in which a connection between a first vortex generation part and a second vortex generation part is cut off according to this application;
FIG. 3 is a schematic diagram of a structure of a vortex generator that is upwardly lifted according to this application;
FIG. 4 is a schematic diagram of vortex generators that are installed on an object face according to this application;
FIG. 5 is a schematic diagram of a structure of a vortex generator according to this application;
FIG. 6 is a schematic diagram of a structure of a vortex generator according to this application;
FIG. 7 is a schematic diagram of a structure of a vortex generator from a plurality of angles according to this application;
FIG. 8 is a schematic diagram of a structure of a vortex generator from a plurality of angles according to this application;
FIG. 9 is a schematic diagram of a structure of a radome according to this application;
FIG. 10 is a partially enlarged view of an area A in FIG. 9 according to this application;
FIG. 11 is a schematic diagram of a fish scale structure in a target area of a radome body of a radome according to this application; and
FIG. 12 is a schematic diagram of a fish scale structure in a target area of a radome body of a radome according to this application.

### Description of reference numerals

1. vortex generator; 11. first vortex generation part; 12. second vortex generation part;
13. first wing tip; 14. second wing tip; 15. third wing tip; 16. fourth wing tip; 17. fifth wing tip;
111. first side surface; 112. second side surface; 113. third side surface;
121. fourth side surface; 122. fifth side surface; 123. sixth side surface.

### DESCRIPTION OF EMBODIMENTS

An embodiment of this application provides a vortex generator. The vortex generator may be used in a device installed high above ground, for example, may be used in a radome installed on a top of a communication tower. For example, the vortex generator may be installed on an outer surface of a radome body of the radome. The vortex generator may also be used in a device flying above ground, for example, may be used in an aircraft and an unmanned aerial vehicle. For example, the vortex generator may be installed on an outer surface of the aircraft and the unmanned aerial vehicle.

The vortex generator is an apparatus that can enable flowing air to generate a wing tip vortex at a wing tip position. The wing tip vortex is short for a wing tip vortex flow, and the flowing air may also be referred to as an air flow.

A principle of generating the wing tip vortex by the vortex generator at the wing tip is that when the air flows to the vortex generator, atmospheric pressures on two sides of an air flow direction of the vortex generator are different. As a result, at the wing tip, the air flows from a high pressure area to a low pressure area, generating a spiral vortex. Because the vortex is generated at the wing tip, the vortex is referred to as the wing tip vortex.

Before flowing to the vortex generator, the air flow is a laminar flow. The laminar flow is a form of smooth or regular air flow. When the air flows to the vortex generator, the wing tip vortex is generated at the wing tip. Therefore, the air flow changes from the laminar flow to a turbulent flow. The turbulent flow is a form of irregular air flow, and the turbulent flow may also be referred to as a chaotic flow, a disturbed flow, or a turbulence.

After the air flows to the vortex generator, a form of air flow changes from the laminar flow to the turbulent flow. A transition from the laminar flow to the turbulent flow is usually referred to as a transition. Therefore, the vortex generator may also be referred to as a transition generator.

The turbulent flow can delay separation between the air flow and the vortex generator. Once the separation is delayed, the resistance of the air flow can be reduced, in other words, wind resistance can be reduced.

In this solution, the vortex generator generates the wing tip vortex at the wing tip, so that the air flow changes into the turbulent flow. This enhances a turbulence degree of the air flow, further delays the separation between the air flow and the vortex generator, to reduce the wind resistance. In this case, the vortex generator having this feature is installed on an outer surface of the radome, so that resistance of wind to the radome can be reduced, in other words, wind resistance to the radome is reduced. This reduces a safety risk of wind resistance to the antenna and improves safety performance of the antenna.

In addition, once the wind resistance to the radome of the antenna is reduced, a size of the radome may be appropriately increased. Although the size of the radome is increased, the wind resistance to the radome does not greatly increase, or even does not increase. It can be seen that the reduction of the wind resistance to the radome of the antenna contributes to increasing the size of the radome to some extent.

In addition, the vortex generator shown in this embodiment may generate resistance reduction effect on air flows from various directions.

The following describes in detail the vortex generator shown in this embodiment.

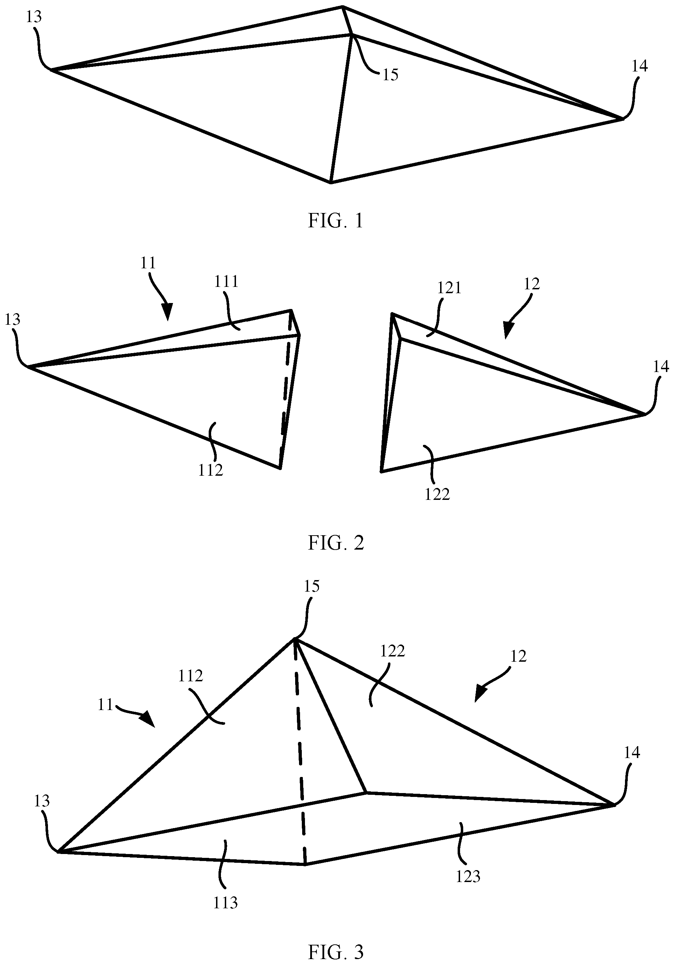

FIG. 1 is a schematic diagram of a structure of a vortex generator. FIG. 2 is a schematic diagram of a vortex generator in which a first vortex generation part 11 and a second vortex generation part 12 are cut off along a connection face between the first vortex generation part 11 and the second vortex generation part 12, and the first vortex generation part 11 and the second vortex generation part 12 are separated. FIG. 3 is a schematic diagram of a structure of the vortex generator shown in FIG. 1 that is upwardly lifted.

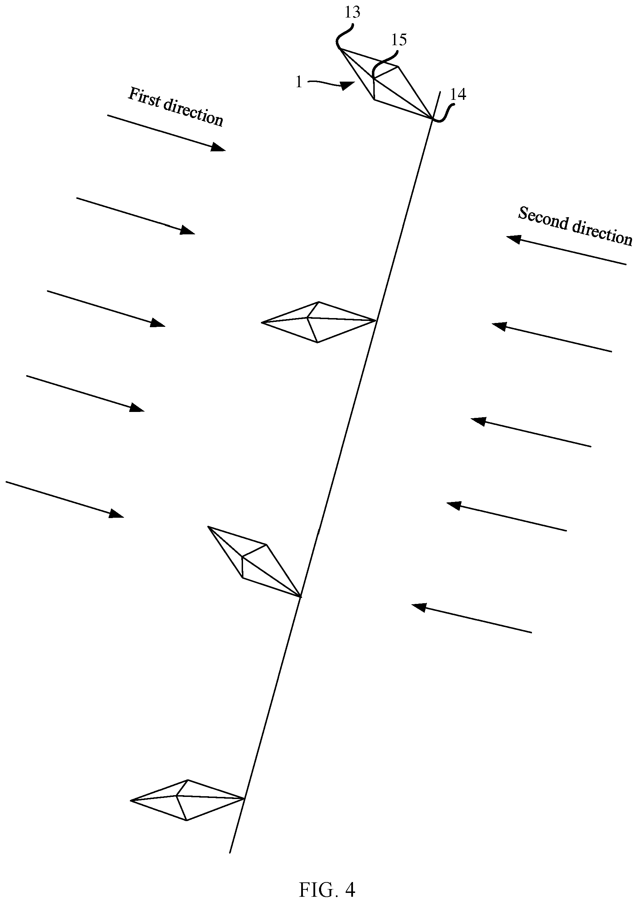

FIG. 4 is a schematic diagram of a plurality of vortex generators that are installed on an object face. The object face may be an outer surface of a radome, or may be an outer surface of a shell of an aircraft or an unmanned aerial vehicle.

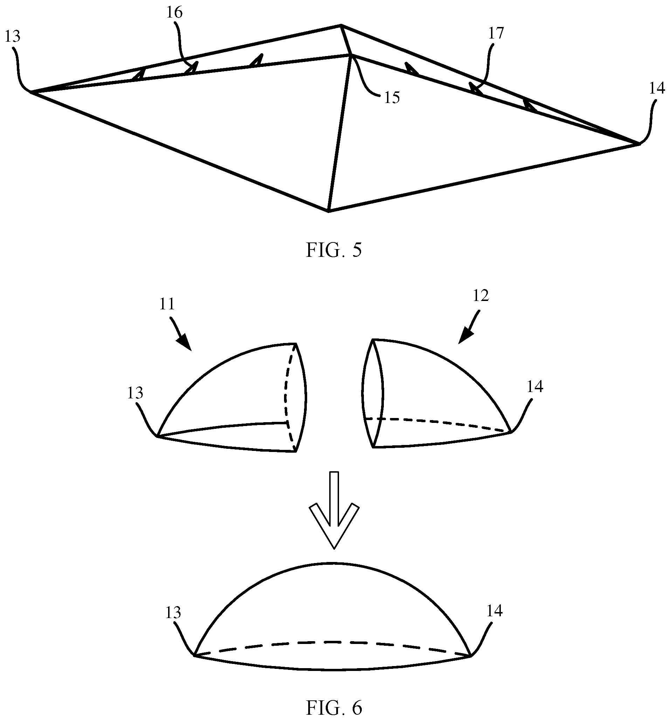

FIG. 5 is a schematic diagram of a structure of a vortex generator. The vortex generator includes a first wing tip 13, a second wing tip 14, a third wing tip 15, at least one fourth wing tip 16, and at least one fifth wing tip 17.

As shown in FIG. 1, with reference to FIG. 2, the vortex generator includes the first vortex generation part 11 and the second vortex generation part 12. The first vortex generator 11 is connected to the second vortex generation part 12. As shown in FIG. 2, with reference to FIG. 1, the first vortex generation part 11 and the second vortex generation part 12 are symmetric with respect to the connection face. Alternatively, the first vortex generation part 11 and the second vortex generation part 12 may be centrally symmetric with respect to a center point of the vortex generator.

In an example, the first vortex generation part 11 can excite a wing tip vortex, the second vortex generation part 12 can also excite a wing tip vortex. For this excitation purpose, as shown in FIG. 2, there is a first wing tip 13 in a length direction at a first end of the first vortex generation part 11, and there is a second wing tip 14 in a length direction at a first end of the second vortex generation part 12. A second end of the first vortex generation part 11 in the length direction is connected to a second end of the second vortex generation part 12 in the length direction.

The first wing tip 13 and the second wing tip 14 are both sharp parts of the vortex generator. An air flow may generate a wing tip vortex at each of the first wing tip and the second wing tip.

In an example, as shown in FIG. 1, the first vortex generation part 11 and the second vortex generation part 12 are integrally formed to form the vortex generator. Therefore, it may also be referred to as that there is the first wing tip 13 and the second wing tip 14 respectively in the length direction at the two ends of the vortex generator.

As shown in FIG. 4, the plurality of the foregoing vortex generators are vertically installed on the object face. Arrows indicate directions of air flows. As shown in FIG. 4, an air flow entering from the first wing tip 13, in other words, the air flow entering the vortex generator from a first direction, may generate a wing tip vortex at the first wing tip 13. This delays separation between the air flow and the vortex generator, achieving resistance reduction effect. As shown in FIG. 4, an air flow entering from the second wing tip 14, in other words, the air flow entering the vortex generator from a second direction, may generate a wing tip vortex at the second wing tip 14. This delays separation between the air flow and an object face on which the vortex generator is located, achieving resistance reduction effect.

It can be learned that, the vortex generator can reduce the resistance of both the air flow entering from the first wing tip 13 and the air flow entering from the second wing tip 14. Therefore, the vortex generator can reduce the resistance of the air flow in a larger direction range. Compared with a related technology in which a vortex generator can reduce resistance of an air flow entering only from a first direction or a second direction, the vortex generator in this application can further enhance the resistance reduction effect.

In an example, to enhance the wind resistance reduction effect, correspondingly, as shown in FIG. 1, there is also a third wing tip 15 at a connection between the first vortex generation part 11 and the second vortex generation part 12.

The third wing tip 15 is also a sharp part of the vortex generator. An air flow may generate a wing tip vortex at the third wing tip.

In this way, the plurality of the foregoing vortex generators are vertically installed on the object face. As shown in FIG. 4, the air flow entering from the first wing tip 13, in other words, the air flow entering the vortex generator from the first direction, may separately generate a wing tip vortex at each of the first wing tip 13 and the third wing tip 15. This delays separation between the air flow and the vortex generator, achieving resistance reduction effect. As shown in FIG. 4, the air flow entering from the second wing tip 14, in other words, the air flow entering the vortex generator from the second direction, may separately generate a wing tip vortex at each of the second wing tip 14 and the third wing tip 15. This delays separation between the air flow and an object face on which the vortex generator is located, achieving resistance reduction effect.

In an example, to increase a quantity of wing tip vortices, correspondingly, as shown in FIG. 5, the first vortex generation part 11 may further include at least one fourth wing tip 16. The fourth wing tip 16 may be distributed between the first end and the second end of the first vortex generation part 11 and located on a top of the first vortex generation part 11. The top of the first vortex generation part 11 is a part opposite to a bottom in a position. The bottom of the first vortex generation part 11 is a part configured to be installed on the object face.

For example, as shown in FIG. 5, the fourth wing tip 16 is located on a connection line between the first wing tip 13 and the third wing tip 15, and may be evenly distributed on the connection line.

As shown in FIG. 5, a tip of the fourth wing tip 16 faces the second end of the first vortex generation part 11. For example, the tip of the fourth wing tip 16 faces the third wing tip 15, that is, the fourth wing tip 16 tilts towards a direction close to the third wing tip 15.

Similarly, as shown in FIG. 5, the second vortex generation part 12 may also include at least one fifth wing tip 17. The fifth wing tip 17 is located between the first end and the second end of the second vortex generation part 12, and is located on a top of the second vortex generation part 12. The top of the second vortex generation part 12 is a part opposite to a bottom in a position. The bottom of the second vortex generation part 12 is a part for installing on the object face.

For example, as shown in FIG. 5, the fifth wing tip 17 is located on a connection line between the second wing tip 14 and the third wing tip 15, and may be evenly distributed on the connection line.

As shown in FIG. 5, a tip of the fifth wing tip 17 faces the second end of the second vortex generation part 12. For example, the tip of the fifth wing tip 17 faces the third wing tip 15, that is, the fifth wing tip 17 tilts towards a direction close to the third wing tip 15.

Certainly, the tip of the fourth wing tip 16 may alternatively face the first end of the first vortex generation part 11, in other words, face the first wing tip 13. The tip of the fifth wing tip 17 may alternatively face the first end of the second vortex generation part 12, in other words, face the second wing tip 14. When processing the vortex generator, a skilled person may make a flexible selection based on specific wind resistance reduction effect.

The fourth wing tip 16 of the first vortex generation part 11 and the fifth wing tip 17 of the second vortex generation part 12 increase the quantity of wing tips. This can form a relatively large quantity of wing tips, further enhance a turbulence degree of the air flow, and further enhance wind resistance reduction effect.

The following describes in detail formation of specific structures of the first wing tip 13, the second wing tip 14, and the third wing tip 15 of the vortex generator.

To enable the vortex generator to form the first wing tip 13, the second wing tip 14, and the third wing tip 15, correspondingly, as shown in FIG. 2, a height of the first vortex generation part 11 gradually increases from the first end to the second end, and a thickness of the first vortex generation part 11 gradually decreases from the bottom to the top. Similarly, a height of the second vortex generation part 12 gradually increases from the first end to the second end, and a thickness of the second vortex generation part 12 gradually decreases from the bottom to the top.

The bottom of the first vortex generation part 11 and the bottom of the second vortex generation part 12 are a part of a bottom of the vortex generator, and the bottom of the vortex generator is a part configured to be installed on the object face.

Because the bottom of the vortex generator is the part configured to be installed on the object face, the bottom of the vortex generator matches the object face. For example, if the object face is a plane, the bottom of the vortex generator is a plane, and if the object face is an arc face, the bottom of the vortex generator is also an arc surface.

In an example, the height of the first vortex generation part 11 gradually increases from the first end to the second end in a length direction, and the thickness of the first vortex generation part 11 gradually decreases from the bottom to the top in a height direction. Therefore, the first end of the first vortex generation part 11 is relatively sharp, forming the first wing tip 13.

In addition, the height of the first vortex generation part 11 gradually increases from the first end to the second end, and the thickness of the first vortex generation part 11 gradually decreases from the bottom to the top. Therefore, the first vortex generation part 11 presents a streamlined change.

Similarly, the height of the second vortex generation part 12 gradually increases from the first end to the second end in a length direction, and the thickness of the second vortex generation part 12 gradually decreases from the bottom to the top in a height direction. Therefore, the first end of the second vortex generation part 12 is also relatively sharp, forming the second wing tip 14.

In addition, the height of the second vortex generation part 12 gradually increases from the first end to the second end, and the thickness of the second vortex generation part 12 gradually decreases from the bottom to the top. Therefore, the second vortex generation part 12 presents a streamlined change.

A height of the second end of the first vortex generation part 11 is equal to a height of the second end of the second vortex generation part 12. In this case, after the second end of the first vortex generation part 11 is connected to the second end of the second vortex generation part 12, a sharp part may be generated at a connection, to form the third wing tip 15.

In an example, because a tip of a pyramid is relatively sharp, as shown in FIG. 2, the first vortex generation part 11 and the second vortex generation part 12 of the vortex generator are both in a pyramid shape.

Still refer to FIG. 2. A tip of the first vortex generation part 11 is the first wing tip 13, and a tip of the second vortex generation part 12 is the second wing tip 14. A base of the first vortex generation part 11 is connected to a base of the second vortex generation part 12.

The pyramid may be specifically a triangular pyramid.

As shown in FIG. 2, the first vortex generation part 11 is in a triangular pyramid shape, and the second vortex generation part 12 is in a triangular pyramid shape. The triangular pyramid is a pyramid with a triangle base.

As shown in FIG. 2, the base of the first vortex generation part 11 is a triangle. As shown in FIG. 2, with reference to FIG. 3, the first vortex generation part 11 includes three side surfaces, denoted as a first side surface 111, a second side surface 112, and a third side surface 113. The first side surface 111 and the second side surface 112 are used to form a side part of the vortex generator, and the third side surface 113 is used to form the bottom of the vortex generator.

Similarly, as shown in FIG. 2, the base of the second vortex generation part 12 is a triangle. As shown in FIG. 2, with reference to FIG. 3, the second vortex generation part 12 also includes three side surfaces, denoted as a fourth side surface 121, a fifth side surface 122, and a sixth side surface 123. The fourth side surface 121 and the fifth side surface 122 are used to form a side part of the vortex generator, and the sixth side surface 123 is used to form the bottom of the vortex generator.

As shown in FIG. 2, with reference to FIG. 1, the first side surface 111 of the first vortex generation part 11 and the fourth side surface 121 of the second vortex generation part 12 form one side part of the vortex generator. The second side surface 112 of the first vortex generation part 11 and the fifth side surface 122 of the second vortex generation part 12 form another side part of the vortex generator.

As shown in FIG. 2, the first vortex generation part 11 and the second vortex generation part 12 are both in a triangular pyramid shape. The vortex generator formed by connecting the first vortex generation part 11 and the second vortex generation part 12, as shown in FIG. 1, with reference to FIG. 3, is a triangular bipyramid, the third wing tip 15 is the tip, and the base is in a rhombus shape.

The first vortex generation part 11 and the second vortex generation part 12 may be in a triangular pyramid shape, or may be in a semi-cone shape. The semi-cone is a cone with a semi-circular base. Bases of the two semi-cones are connected. A tip of the semi-cone is the first wing tip 13, and a tip of the other semi-cone is the second wing tip 14.

The vortex generator formed by connecting the first vortex generation part 11 and the second vortex generation part 12 that are both in a semi-cone shape is in a shuttle shape.

In an example, if the object face on which the vortex generator is located is a plane, the vortex generator is in a shuttle shape. However, if the object face on which the vortex generator is located is an arc face, the vortex generator is in a crescent shape.

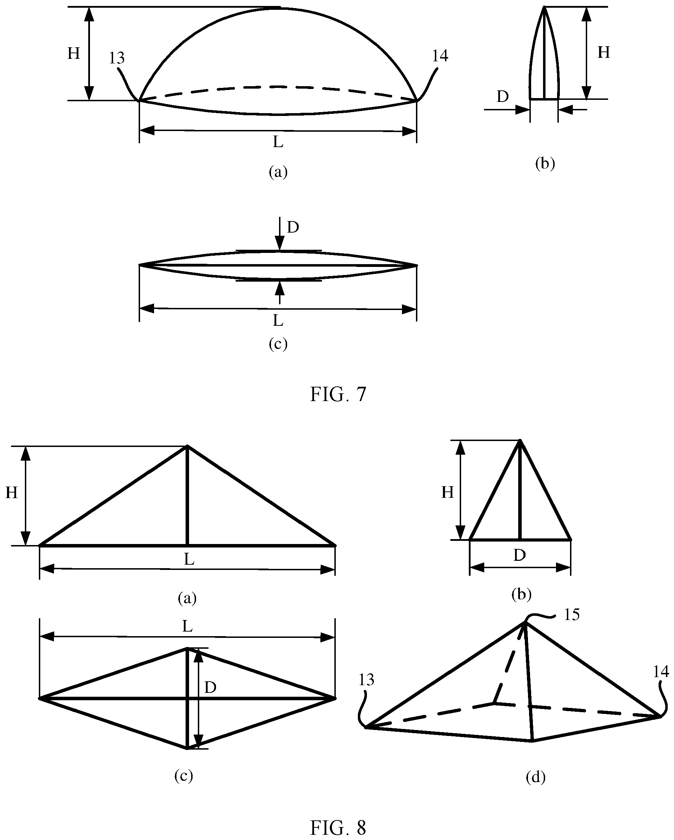

In another example, as shown in FIG. 6 and FIG. 7, the bottom of the vortex generator is in an oval shape, a top edge of the vortex generator is in an arc shape, to form a blade edge. A front surface and a rear surface of the vortex generator are both arc surfaces.

Correspondingly, as shown in FIG. 6, an end face of the second end of the first vortex generation part 11 and an end face of the second end of the second vortex generation part 12 are both in an oval shape. The bottom of the first vortex generation part 11 and the bottom of the second vortex generation part 12 form an oval outline. A side part of the first vortex generator 11 and a side part of the second vortex generation part 12 are both in an arc shape.

FIG. 6 is a schematic diagram of a structure of another vortex generator. The first vortex generation part 11 and the second vortex generation part 12 shown in FIG. 6 are obtained by cutting the vortex generator along a vertical central face of the vortex generator. Actually, the first vortex generation part 11 and the second vortex generation part 12 are integrally formed to form the vortex generator. Certainly, the first vortex generation part 11 and the second vortex generation part 12 may alternatively be sequentially processed, and then spliced into the vortex generator. A forming process of the vortex generator is not a key point. This is not limited in this embodiment.

FIG. 7 is a schematic diagram of the vortex generator from various angles. (a) in FIG. 7 is a front view of the vortex generator, (b) in FIG. 7 is a left view of the vortex generator, and (c) in FIG. 7 is a top view of the vortex generator.

In this case, the top edge of the vortex generator is in a streamlined arc shape, so that wind resistance can be reduced, and the first wing tip 13 and the second wing tip 14 are respectively formed at two ends of the vortex generator.

It can be learned from the foregoing that, regardless of whether the vortex generator is a pyramid shown in FIG. 1, for example, a quadrangular pyramid (pyramid with a rhombus base), or the vortex generator is in the shape shown in FIG. 6, there is the first wing tip 13 and the second wing tip 14 respectively in the length direction at the two ends of the vortex generator. The two wing tips are both formed by the bottom and the side part of the vortex generator. Therefore, the two wing tips 14 are both located at the bottom.

In this way, the air flow entering the vortex generator from the first wing tip 13 generates a wing tip vortex at the first wing tip 13, reducing wind resistance. The air flow entering the vortex generator from the second wing tip 14 generates a wing tip vortex at the second wing tip 14, reducing wind resistance. It can be learned that the vortex generator can eliminate directionality of wind resistance reduction. The vortex generator can reduce the resistance of both the air flow entering from the first wing tip 13 and the air flow entering from the second wing tip 14.

A specific shape of the vortex generator is not limited in this embodiment, provided that the first wing tip and the second wing tip can be formed at two opposite ends, and both the first wing tip and the second wing tip are located at the bottom. The bottom is a part configured to be installed on the object face. For ease of description, in this embodiment, an example in which both the first vortex generation part and the second vortex generation part are in a triangular pyramid shape is used. In this case, the formed vortex generator is a quadrangular pyramid with a rhombus base.

The foregoing describes the shape of the vortex generator, and the following describes a size of the vortex generator.

A larger aspect ratio of the vortex generator indicates better resistance reduction effect. The aspect ratio is a ratio of wingspan to chord length. The wingspan may be a length of the vortex generator, that is, a distance between the first wing tip 13 and the second wing tip 14. The chord length may be a maximum thickness of the vortex generator, that is, a bottom thickness of the vortex generator at the third wing tip 15.

In addition, if the vortex generator is relatively thick, and when the air flow flows to the vortex generator, the vortex generator blocks the air flow, generating resistance. Therefore, the vortex generator is relatively thin.

Therefore, the vortex generator is relatively long and thin. The vortex generator with a relatively large ratio of the length to the maximum thickness has relatively good resistance reduction effect.

For example, the ratio of the length to the maximum thickness of the vortex generator may be 3: 1.

The length L of the vortex generator is the distance between the first wing tip 13 and the second wing tip 14. Refer to (c) in FIG. 8.

FIG. 8 is a schematic diagram of the vortex generator from various angles. (a) in FIG. 8 is a front view of the vortex generator, (b) in FIG. 8 is a side view of the vortex generator, (c) in FIG. 8 is a top view of the vortex generator, and (d) in FIG. 8 is a three-dimensional view of the vortex generator.

The maximum thickness D of the vortex generator is the bottom thickness of the vortex generator at the third wing tip 15. Refer to (c) in FIG. 8.

The length L of the vortex generator may be between 5 millimeters and 40 millimeters. The maximum thickness of the vortex generator may be between 5 mm and 15 mm.

The height H of the vortex generator, that is, a height of the connection between the first vortex generation part 11 and the second vortex generation part 12 of the vortex generator, is also a height of the vortex generator at the third wing tip 15, and is a maximum height of the vortex generator. Refer to (a) and (b) in FIG. 8.

If the vortex generator is excessively high, resistance generated by the vortex generator is relatively large. However, if the vortex generator is excessively low, it is difficult to form the third wing tip 15. The height of the vortex generator may be determined based on resistance reduction effect of the vortex generator.

For example, the height of the vortex generator may be equal to the maximum thickness of the vortex generator, then the height of the vortex generator may also be between 5 millimeters and 15 millimeters.

Specific values of the length L, the maximum thickness D, and the height H of the vortex generator are not limited in this embodiment, and may be determined based on a size of the object face on which the vortex generator is located, or may be determined based on resistance reduction effect in a simulation experiment.

Based on the foregoing description, the pyramid-shaped vortex generator is installed on the object face. When the air flow flows to the vortex generator, for example, as shown in FIG. 4, when the air flow flows from the first direction to the vortex generator, an atmospheric pressure on the first side surface 111 of the first vortex generation part 11 is not equal to an atmospheric pressure on the second side surface. There is a pressure difference, and a wing tip vortex is separately generated at each of the first wing tip 13 and the third wing tip 15.

As shown in FIG. 4, when the air flow flows from the second direction to the vortex generator, an atmospheric pressure on the fourth side surface 121 of the second vortex generation part 12 is not equal to an atmospheric pressure on the fifth side surface 122. There is a pressure difference, and a wing tip vortex is separately generated at each of the second wing tip 14 and the third wing tip 15.

It can be learned that the vortex generator can delay separation between the air flow and the object face by using the wing tip vortex, reducing wind resistance.

In addition, the vortex generator can reduce resistance of the air flow from the first direction and resistance of the air flow from the second direction. The first direction is opposite to the second direction. It can be seen that the vortex generator can reduce resistance of air flows blown to the object face from various directions. The object face is also an installing face of the vortex generator.

In this embodiment of this application, there is the first wing tip and the second wing tip respectively in the length direction at the two ends of the vortex generator. There is the third wing tip between the first wing tip and the second wing tip of the vortex generator. In this case, an air flow entering the vortex generator from the first wing tip generates a wing tip vortex at the first wing tip. An air flow entering the vortex generator from the second wing tip generates a wing tip vortex at the second wing tip. The wing tip vortex can delay separation between the air flow and the radome. Once the separation is delayed, the resistance of the air flow to the radome can be reduced.

Therefore, the vortex generator is used in the radome to reduce resistance of an air flow to the radome. Once the resistance of the air flow to the radome is reduced, a safety risk of wind resistance to an antenna can be reduced.

In addition, the air flow entering the vortex generator from the first wing tip may generate the wing tip vortex at the first wing tip, and the air flow entering the vortex generator from the second wing tip may generate the wing tip vortex at the second wing tip. Therefore, regardless of a direction from which the air flow blows towards the radome, once the air flow enters the vortex generator, the vortex generator can reduce wind resistance. Therefore, the vortex generator can reduce resistance of air flows blown to the radome from various directions, and eliminate directionality of wind resistance reduction, further enhancing the resistance reduction effect.

An embodiment of this application further provides a radome of an antenna, where the antenna may be a base station antenna installed on a top of a communication tower. A type of the antenna to which the radome belongs may be a multiple input multiple output (multiple input multiple output, MIMO) antenna, a passive antenna, an A+P antenna, or the like. A specific type of the antenna to which the radome belongs is not limited in this embodiment.

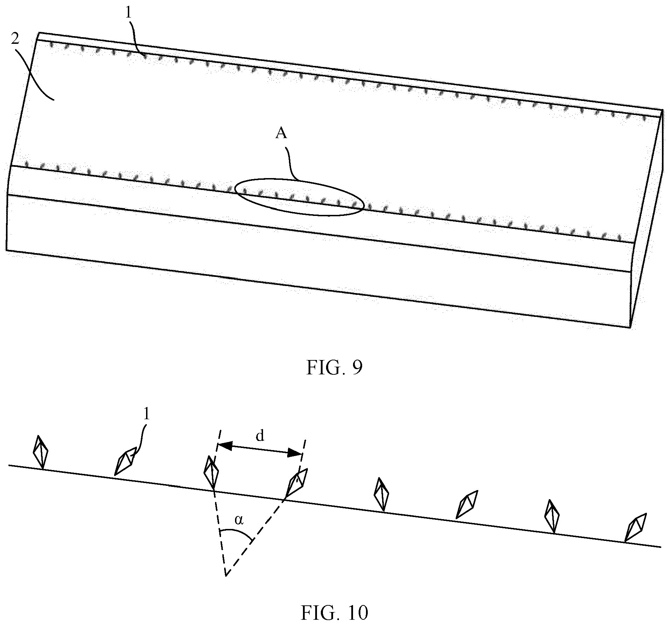

FIG. 9 is a schematic diagram of the radome. FIG. 10 is a partially enlarged view of an A in FIG. 9.

As shown in FIG. 9, the radome includes a radome body 2 and the foregoing vortex generator 1. There are a plurality of vortex generators 1, and the plurality of vortex generators 1 are located in a target area of the radome body 2. The target area is an area in which an air flow does not leave the radome body 2 and is close to a critical area.

The critical area may be, for example, a boundary area between a windward area and a leeward area of the radome body 2. The windward area is an area of the radome body 2 that can be blown by the air flow, and the leeward area is an area of the radome body 2 that is not blown by the air flow. The critical area may also be interpreted as a boundary area between the area in which the air flow does not leave the radome body and an area in which the air flow leaves the radome body.

Alternatively, the target area may be understood as an area in which the air flow is about to leave the radome body 2 but has not left the radome body 2.

In an example, for a structure of the radome body 2 of the radome, the radome body 2 may be a rectangular box, including a windward panel and a leeward panel at opposite positions, two side panels at opposite positions, and a top panel and a bottom panel at opposite positions. The leeward panel is fastened to the communication tower.

In an example, to reduce resistance of the air flow to the radome, in other words, to reduce wind resistance, the radome is usually installed on the top of the communication tower at a specific downtilt angle. Installation of the radome is not specifically limited in this embodiment, and may be flexibly selected based on an actual situation.

In an example, to reduce the resistance of the air flow to the radome, a connection between the windward panel and the side panel of the radome may be a round-corner transition, a connection between the windward panel and the top panel of the radome may also be a round-corner transition, and a connection between the windward panel and the bottom plate of the radome may also be a round-corner transition. The Round-corner transition can enhance the streamline pattern of the radome and reduce the wind resistance.

The foregoing target area may be determined based on experience and a simulation experiment. For example, the target area may be a position that is of the windward panel of the radome body 2 and that is close to the side panel. For another example, the target area may alternatively be the connection between the windward panel and the side panel.

There may be a plurality of target areas. For example, a position that is of the windward panel and that is close to one side panel is one target area, a position that is of the windward panel and that is close to the other side panel is one target area, a position that is of the windward panel and that is close to the top panel is one target area, and a position that is of the windward panel and that is close to the bottom panel is one target area.

Alternatively, in a case in which the target area is a connection between two side panels, a connection between the windward panel and one side panel is one target area, a connection between the windward panel and the other side panel is one target area, a connection between the windward panel and the top panel is one target area, and a connection between the windward panel and the bottom panel is one target area.

Alternatively, a part of the target area may belong to the windward panel, and the other part of the target area belongs to a connection between the windward panel and another panel (for example, the side panel, the top panel, or the bottom panel).

For installation of the plurality of vortex generators 1, the plurality of vortex generators may be vertically installed in the target area of the radome body 2. For example, as shown in FIG. 9, the plurality of vortex generators 1 may be vertically fastened in a row at the position that is of the windward panel and that is close to the side panel. For another example, the plurality of vortex generators 1 may further be vertically installed in a row at the connection between the windward panel and the side panel.

If the vortex generator 1 is installed on the windward panel, the bottom of the vortex generator is a plate structure that matches the windward panel. However, if the vortex generator 1 is installed at the round-corner connection between the windward panel and the side panel, the bottom of the vortex generator is an arc plate that matches the round-corner connection.

In this embodiment, a specific part of the radome body 2 to which the target area belongs is not specifically limited, provided that the target area is the area in which the air flow does not leave the radome body 2 and is close to the critical area.

Still refer to FIG. 9. A plurality of vortex generators 1 are installed in a row in the target area that is of the windward panel of the radome body 2 and that is close to one side panel, and a plurality of vortex generators 1 are installed in a row in the target area that is of the windward panel of the radome body 2 and that is close to the other side panel.

In this way, an air flow that is vertically blown to the windward panel of the radome body 2 may pass through the vortex generators 1 on left and right sides, so that the air flow is shunted, and many small wing tip vortices are generated at the vortex generators 1. This excites turbulence of the air flow, and delays separation between the air flow and the radome, achieving resistance reduction effect.

Certainly, an air flow blown from one side of the radome to the windward panel may further pass through the vortex generators 1, so that the air flow is shunted, and many small wing tip vortices are generated at the vortex generators 1. This excites turbulence of the air flow, and delays the separation between the air flow and the radome, achieving the resistance reduction effect.

In addition, even after an air flow that is blown from the leeward panel of the radome to the windward panel flows to the vortex generator 1, the air flow can be shunted, and many small wing tip vortices are generated at the vortex generators 1. This excites turbulence of the air flow, and delays the separation between the air flow and the radome, achieving the resistance reduction effect.

It can be learned that, the air flow blown from each direction of a plane on which the windward panel of the radome is located to the windward panel may pass through the vortex generator 1, and a large quantity of small wing tip vortices is generated at a plurality of vortex generators 1. This enhances a turbulence degree of the air flow, delays the separation between the air flow and the radome, and reduces resistance of the air flow to the radome, further enhancing wind resistance reduction effect.

In an example, as shown in FIG. 9, one row of vortex generators 1 is distributed in the target area that is of the radome body 2 of the radome 2 and that is close to the side panel. Certainly, a plurality of rows of vortex generators 1 may be distributed in the target area that is of the radome body 2 of the radome and that is close to the side panel.

In the solution in which the plurality of rows of vortex generators 1 are distributed in the target area that is of the radome body 2 and that is close to the side panel, two adjacent rows of vortex generators may be staggered. For example, each vortex generator in one row of vortex generators may correspond to a spacing between two vortex generators in an adj acent row of vortex generators.

In the solution in which the plurality of rows of vortex generators 1 are distributed in the target area that is of the radome body 2 and that is close to the side panel, a total width of the plurality of rows of vortex generators may be between 5 millimeters and 45 millimeters. The total width may be a product of a quantity of rows and a shortest distance between the first wing tip 13 and the second wing tip 14 of the vortex generator, plus a product of a quantity of row spacings and a row spacing.

As described above, the plurality of vortex generators 1 may be installed in a row in the target area of the radome body 1. An included angle α between two adjacent vortex generators 1 in each row of the vortex generators is between 0 degrees and 60 degrees.

The included angle α between the two adjacent vortex generators 1 may be an included angle between a connection line between a first wing tip 13 and a second wing tip 14 of one vortex generator and a connection line between a first wing tip 13 and a second wing tip 14 of another adjacent vortex generator.

For example, as shown in FIG. 9, the included angle between the two adjacent vortex generators 1 may be 45 degrees. For another example, the included angle between the two adjacent vortex generators 1 may alternatively be 0 degrees.

In an example, a spacing between two vortex generators in one row of vortex generators may be determined based on an empirical value and a simulation experiment. For example, the center distance d between the two adj acent vortex generators 1 in each row of the vortex generators is between 10 millimeters and 75 millimeters.

In this embodiment of this application, the radome includes the foregoing vortex generator. There is the first wing tip and the second wing tip respectively in the length direction at the two ends of the vortex generator. There is a third wing tip between the first wing tip and the second wing tip of the vortex generator. In this case, an air flow entering the vortex generator from the first wing tip generates a wing tip vortex at the first wing tip. An air flow entering the vortex generator from the second wing tip generates a wing tip vortex at the second wing tip. The wing tip vortex can delay separation between the air flow and the radome. Once the separation is delayed, the resistance of the air flow to the radome can be reduced.

Therefore, the vortex generator is used in the radome to reduce resistance of an air flow to the radome. Once the resistance of the air flow to the radome is reduced, a safety risk of wind resistance to an antenna can be reduced.

In addition, the air flow entering the vortex generator from the first wing tip may generate the wing tip vortex at the first wing tip, and the air flow entering the vortex generator from the second wing tip may generate the wing tip vortex at the second wing tip. Therefore, regardless of a direction from which the air flow blows towards the radome, once the air flow enters the vortex generator, the vortex generator can reduce wind resistance. Therefore, the vortex generator can reduce resistance of air flows blown to the radome from various directions, further enhancing resistance reduction effect.

An embodiment of this application further provides a radome. The radome includes a radome body 2, and roughness of an outer surface of the radome body 2 in a target area is greater than a target value. As described above, the target area is an area in which an air flow does not leave the radome body 2 and is close to a critical area. For specific descriptions, refer to the foregoing descriptions. Details are not described herein again.

The target value may be determined based on an empirical value and a simulation experiment, or may be determined based on wind resistance reduction effect.

The radome delays separation between an air flow and the radome body of the radome by increasing the roughness in the target area, to reduce resistance of the air flow to the radome.

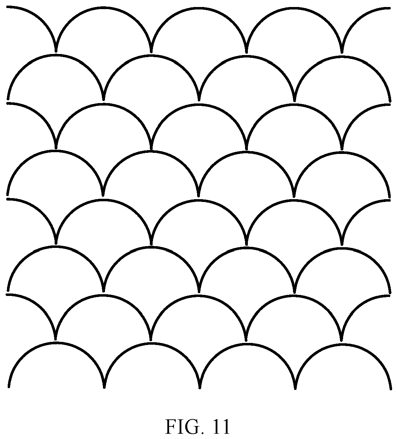

A manner of increasing the roughness may include: disposing a fish scale structure in the target area. For the fish scale structure, refer to FIG. 11.

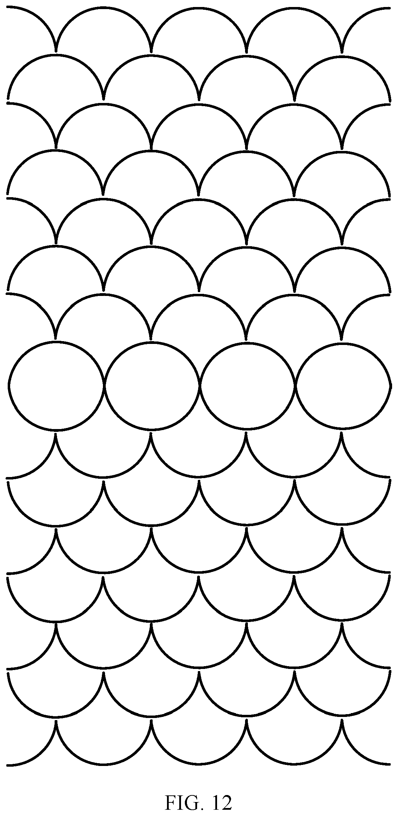

In an example, to eliminate directionality of wind resistance reduction, two parts of fish scale structures in opposite directions may be disposed in the target area. Refer to FIG. 12.

A specific arrangement direction of the fish scale structure in the target area of the radome body may be determined based on an empirical value and a simulation experiment.

The fish scale structure belongs to a bionic structure. The bionic structure is used to increase the roughness of the radome, to enhance wind resistance reduction effect.

Another manner of increasing the roughness may be: disposing a concave array structure in the target area. The concave array structure may be a concave array similar to an outer surface of a Golf ball.

Another manner of increasing the roughness may be: disposing a convex array structure in the target area.

A specific implementation in which the roughness of the radome in the target area is greater than the target value is not limited in this embodiment, and a proper implementation may be selected based on a simulation result.

In this embodiment of this application, the radome body of the radome has relatively high roughness in the target area. In this way, when the air flow flows through the target area, viscosity of the air flow is increased, separation between the air flow and the radome is delayed, and resistance of the air flow to the radome is reduced, achieving wind resistance reduction effect.

An embodiment of this application further provides an antenna. The antenna may be specifically a base station antenna, and is installed on a top of a communication tower. The antenna includes the foregoing radome.

The radome of the antenna includes a vortex generator as described above. There is a first wing tip and a second wing tip respectively in a length direction at two ends of the vortex generator. There is a third wing tip between the first wing tip and the second wing tip of the vortex generator. In this case, an air flow entering the vortex generator from the first wing tip generates a wing tip vortex at the first wing tip. An air flow entering the vortex generator from the second wing tip generates a wing tip vortex at the second wing tip. The wing tip vortex can delay separation between the air flow and the radome. Once the separation is delayed, the resistance of the air flow to the radome can be reduced.

Therefore, the vortex generator is used in the radome to reduce resistance of an air flow to the radome. Once the resistance of the air flow to the radome is reduced, a safety risk of wind resistance to an antenna can be reduced.

In addition, the air flow entering the vortex generator from the first wing tip may generate the wing tip vortex at the first wing tip, and the air flow entering the vortex generator from the second wing tip may generate the wing tip vortex at the second wing tip. Therefore, regardless of a direction from which the air flow blows towards the radome, once the air flow enters the vortex generator, the vortex generator can reduce wind resistance. Therefore, the vortex generator can reduce resistance of air flows blown to the radome from various directions, further enhancing resistance reduction effect.

The foregoing description is merely an embodiment of this application, but is not intended to limit this application. Any modification, equivalent replacement, or improvement made without departing from the principle of this application shall fall within the protection scope of this application.

## Claims

1. A vortex generator, wherein the vortex generator comprises a first vortex generation part (11) and a second vortex generation part (12);
the first vortex generation part (11) comprises a first wing tip (13), wherein the first wing tip (13) is located at a first end of the first vortex generation part (11);
the second vortex generation part (12) comprises a second wing tip (14), wherein the second wing tip (14) is located at a first end of the second vortex generation part (12); and
a second end of the first vortex generation part (11) is connected to a second end of the second vortex generation part (12).

2. The vortex generator according to claim 1, wherein a height H of the first vortex generation part (11) gradually increases from the first end to the second end, and a thickness D of the first vortex generation part (11) gradually decreases from a bottom to a top; and
a height H of the second vortex generation part (12) gradually increases from the first end to the second end, and a thickness D of the second vortex generation part (12) gradually decreases from a bottom to a top.

3. The vortex generator according to claim 1 or 2, wherein the first vortex generation part (11) and the second vortex generation part (12) are symmetric with respect to a connection face.

4. The vortex generator according to any one of claims 1 to 3, wherein the first vortex generation part (11) and the second vortex generation part (12) are both in a pyramid shape; and
a tip of the first vortex generation part (11) is the first wing tip (13), and a tip of the second vortex generation part (12) is the second wing tip (14).

5. The vortex generator according to claim 4, wherein the first vortex generation part (11) and the second vortex generation part (12) are both in a triangular pyramid shape, and the triangular pyramid is a pyramid with a triangle base.

6. The vortex generator according to any one of claims 1 to 5, wherein there is a third wing tip (15) at a connection between the first vortex generation part (11) and the second vortex generation part (12).

7. The vortex generator according to any one of claims 1 to 3, wherein an end face of the second end of the first vortex generation part (11) and an end face of the second end of the second vortex generation part (12) are both in an oval shape;
the bottom of the first vortex generation part (11) and the bottom of the second vortex generation part (12) form an oval outline; and
a side part of the first vortex generation part (11) and a side part of the second vortex generation part (12) are both in an arc shape.

8. The vortex generator according to any one of claims 1 to 7, wherein the first vortex generation part (11) further comprises at least one fourth wing tip (16); and
the fourth wing tip (16) is located between the first end and the second end of the first vortex generation part (11), and is located on a top of the first vortex generation part (11), wherein the top of the first vortex generation part (11) is a position away from an object face on which the vortex generator is located.

9. The vortex generator according to claim 8, wherein a tip of the fourth wing tip (16) faces the second end of the first vortex generation part (11).

10. The vortex generator according to any one of claims 1 to 9, wherein the second vortex generation part (12) further comprises at least one fifth wing tip (17); and
the fifth wing tip (17) is located between the first end and the second end of the second vortex generation part (12), and is located on a top of the second vortex generation part (12), wherein the top of the second vortex generation part (12) is a position away from the object face on which the vortex generator is located.

11. The vortex generator according to claim 10, wherein a tip of the fifth wing tip (17) faces the second end of the second vortex generation part (12).

12. The vortex generator according to any one of claims 1 to 11, wherein a ratio of a length L to a maximum thickness D of the vortex generator is 3: 1; and
the length L of the vortex generator is a distance between the first wing tip (13) and the second wing tip (14), and the maximum thickness D of the vortex generator is a bottom thickness of the connection between the first vortex generation part (11) and the second vortex generation part (12).

13. The vortex generator according to claim 12, wherein the length L of the vortex generator is between 5 millimeters and 40 millimeters.

14. The vortex generator according to any one of claims 1 to 13, wherein a height H of the vortex generator is equal to the maximum thickness D of the vortex generator;
the height H of the vortex generator is a height of the connection between the first vortex generation part (11) and the second vortex generation part (12); and
the maximum thickness D of the vortex generator is the bottom thickness of the connection between the first vortex generation part (11) and the second vortex generation part (12).

15. The vortex generator according to claim 14, wherein the height H of the vortex generator is between 5 millimeters and 15 millimeters.

16. A radome, wherein the radome comprises a radome body (2) and the vortex generator (1) according to any one of claims 1 to 15, and there are a plurality of vortex generators (1); and
the plurality of vortex generators (1) are located in a target area of the radome body (2), wherein the target area is an area in which an air flow does not leave the radome body (2) and is close to a critical area.

17. The radome according to claim 16, wherein the plurality of vortex generators (1) are arranged in a row in the target area of the radome body (2).

18. The radome according to claim 17, wherein an included angle α between two adjacent vortex generators (1) in each row of the vortex generators is between 0 degrees and 60 degrees.

19. The radome according to claim 17 or 18, wherein a center distance d between the two adjacent vortex generators (1) in each row of the vortex generators is between 10 millimeters and 75 millimeters.

20. A radome, wherein the radome comprises a radome body (2), and roughness of an outer surface of the radome body (2) in a target area is greater than a target value; and
the target area is an area in which an air flow does not leave the radome body (2) and is close to a critical area.

21. The radome according to claim 20, wherein the target area of the radome body (2) has one of a fish scale structure, a concave array structure, and a convex array structure.

22. An antenna, wherein the antenna comprises the radome according to any one of claims 16 to 21.
